# EUROPÄISCHE PATENTSCHRIFT

(11) **EP 0 976 595 B1**
(45) Veröffentlichungstag und Bekanntmachung des Hinweises auf die Patenterteilung: **08.01.2003**
(21) Anmeldenummer: 99113195.4
(22) Anmeldetag: 08.07.1999
(51) Int. Cl.: B60J 7/16

(54) **Bedienhebel für einen Dachlukendeckel eines Lastkraftwagens**
Lever for operating a ventilation hatch for roof of lorry
Levier de commande pour aérateur de toit de camion

(30) Priorität: 31.07.1998 DE 19834527
(43) Veröffentlichungstag der Anmeldung: 02.02.2000
(73) Patentinhaber: MAN Nutzfahrzeuge Aktiengesellschaft, 80976 München (DE)
(72) Erfinder: Koch, Erich, Dipl.-Ing., 85757 Karlsfeld (DE); Schönegger-Fösleitner, Erich, Dipl.-Ing., 4400 Steyr (AT); Watzek, Gerhard, Dipl.-Ing, 80935 München (DE)

(56) Entgegenhaltungen:
- EP-A- 0 249 268
- DE-A- 3 538 878
- FR-A- 1 333 975

## Beschreibung

Die Erfindung betrifft einen Bedienhebel nach dem Oberbegriff des Anspruches 1.

Eine Vorrichtung dieser Art ist aus der EP 0 293 619 B1 der Anmelderin bekannt. Der Patentgegenstand ist ein Verriegelungsmechanismus, der einen Bedienhebel mit einem Exzenterhaken aufweist, in den zwei Verriegelungsrasten eingebracht sind, nämlich eine Schließraste und einen Regenraste. Bei der Regenstellung ist die Öffnung des Dachlukendeckels nur so viel, daß kein Regenwasser in das Fahrerhaus gelangen kann. Die Offenstellungsposition ist durch den Federweg der Gasfedern links und rechts des Dachlukendeckels gegeben. Schwierig erwies sich oft das Einstellen des Dachlukendeckels in die Regenposition durch den Fahrer während der Fahrt Außerdem konnte in der Offenstellung der Bedienhebel bei Fahrzeugbewegungen pendeln.

Weiterhin ist ein gattungsgemäßer Bedienhebel für einen Dachlukendeckel aus EP 0 249 268 A1 bekannt.

Aufgabe der Erfindung ist es, einen Bedienhebel darzustellen, der einen verbesserten Bedienungskomfort bietet.

Die Aufgabe wird erfindungsgemäß durch die Merkmale des kennzeichnenden Teiles des Anspruches 1 gelöst.

Dadurch, daß der Bedienhebel selbst eine durchgehende Kulissenführung für die Einstellung der Schließ-, Regen- und Offenstellung aufweist, kommt der Bedienhebel nie außer Eingriff und hat deshalb immer eine definierte Lage. Je eine Gasfeder links und rechts des Dachlukendeckels bringen, mit Ausnahme der Schließstellung, eine Kraft in Richtung Offenstellung des Deckels auf. In der Drehpunktlagerung des Bedienhebels ist je Seite ein Rückstellelement (z. B. eine Biegungsfeder) eingebaut, das ein Moment auf den Bedienhebel in Richtung Waagrechtstellung aufbringt.

In der Schließstellung ist der Bedienhebel annähernd in waagrechter Lage. Der Bedienhebet mit Lagerung ist auf der Unterseite des Dachlukendeckels angebracht. Der Kulissenstein ist am Rahmen der Dachöffnung befestigt.

Aus der Schließstellung in die Offenstellung ist der Dachlukendeckel durch Herunterklappen des Bedienhebels zu bringen.

Aus der Offenstellung in die Regenstellung ist der Dachlukendeckel durch Herunterziehen, leichtem Druck in Fahrtrichtung und durch Schwenken des Bedienhebels um 90° zu bringen. Der Bedienhebel ist in der eingerasteten Regenstellung wieder in annähernd waagrechter Lage.

Aus der Regen- in die Schließstellung ist der Dachlukendeckel durch Herunterklappen und Herunterziehen des Bedienhebels mit leichtem Ziehen entgegen der Fahrtrichtung bis nahe der Schließstellung und anschließendem Klappen des Bedienhebels in die waagrechte Lage zu bringen.

Aus der Offenstellung in die Schließstellung ist der Dachlukendeckel durch Herunterziehen des Bedienhebels und leichtem Zug entgegen der Fahrtrichtung auf den Bedienhebel und durch Schwenken um 90° zu bringen.

Zunächst erscheint diese Bedienweise etwas gewöhnungsbedürftig und es könnten anfangs Bedienfehler entstehen. An die Bewegungsabläufe wird sich der Fahrzeugführer jedoch schnell gewöhnen, denn für das Schließen muß eine leichte Kraft am Bedienhebel entgegen der Fahrtrichtung und für die Offen- und Regenstellung eine leichte Kraft in Fahrtrichtung aufgebracht werden.

Der Fahrer muß das Einstellen der Dachluke ohne Hinsehen auf den Bedienhebel oder die Dachluke durchführen können, damit er von der Fahrbahn nicht wegsehen muß. Hierfür ist die Bedienweise und die geschlossene Kulissenführung geeignet.

Der manuell bedienbare Dachlukendeckel ist eine preiswerte und häufig angewandte Alternative zum elektrisch einstellbaren Schiebedach.

In der Zeichnung ist ein Ausführungsbeispiel der Erfindung schematisch dargestellt.

Es zeigen:
- Fig. 1: die Schließstellung,
- Fig. 2: die Regenstellung,
- Fig. 3: die Offenstellung,
- Fig. 4: einen gekröpften Bedienhebel in Schließstellung und
- Fig. 5: die Draufsicht.

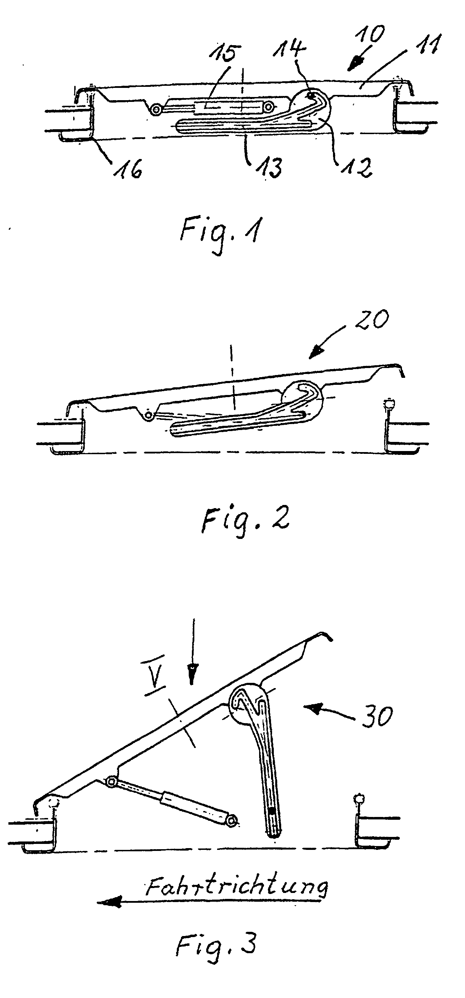

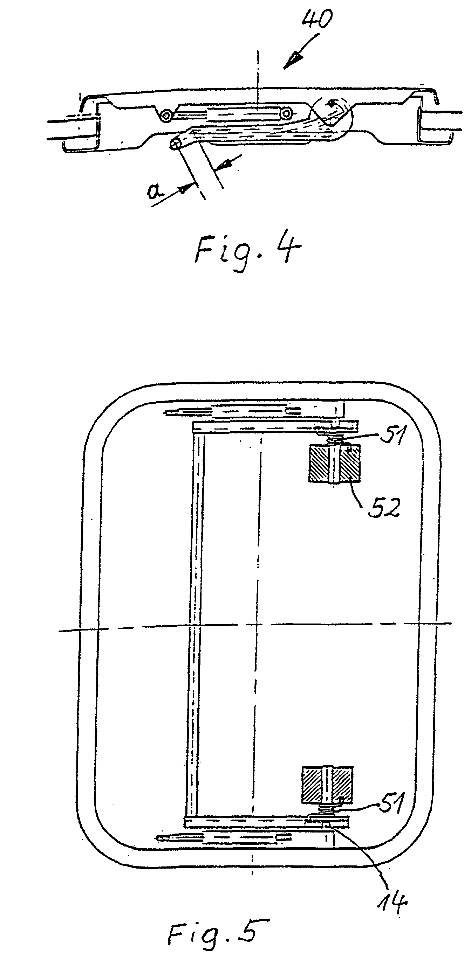

Die Fig. 1 zeigt den Dachlukendeckel 11 in der Schließstellung 10. Der Bedienhebel 12 weist die durchgehende Kulissenführung 13 auf und ist am Dachlukendeckel 11 über Lagerelemente 52 (Fig. 5) gelagert. Der Kulissenstein 14 ist am Dachrahmen 16 gelagert. Die Gasfeder 15 übt eine Druckkraft auf den Dachlukendeckel 11 aus.

Die Fig. 2 zeigt die Regenstellung 20 des Dachlukendeckels 11. In der Regenstellung 20 und in der Schließstellung 10 (Fig. 1) ist der Bedienhebel 12 annähernd in waagrechter Lage.

Die Fig. 3 zeigt die Offenstellung 30. Die Begrenzung der Lage des Dachlukendeckels 11 ergibt sich durch einen Anschlag in der Gasfeder 15.

Die Fig. 4 zeigt eine Verlängerung (a) des Bedienhebels, damit ist der Bedienhebel auch bei einem serienabweichenden Fahrerhaus gut erreichbar.

Die Fig. 5 zeigt die Dachluke in der Draufsicht mit dem Kulissenstein 14, den Lagerelementen 52 für die Lagerung des Bedienhebels 12. Die Biegungsfedern 51 üben ein Moment in Richtung Waagrechtstellung des Bedienhebels 12 aus.

## Patentansprüche

1. Bedienhebel für einen Dachlukendeckel eines Lastkraftwagen-Fahrerhauses, wobei der Dachlukendeckel von einer Schließstellung in eine Regenstellung und in eine Offenstellung bringbar ist, **dadurch gekennzeichnet, daß** der Bedienhebel (12) selbst eine durchgehende Kulissenführung (13) für die Einstellung des Dachlukendeckels (11) in die Schließ- (10), Regen- (20) und Offenstellung (30) aufweist.

2. Bedienhebel nach Anspruch 1, **dadurch gekennzeichnet, daß** der Bedienhebel (11) in gekröpfter Form (a), abhängig von der Fahrerhaushöhe und der Position des Fahrersitzes, verlängerbar (a) ist.

## Claims

1. Operating lever for a roof hatch cover in a truck cab, which roof hatch cover can be brought from a closing position into a rain position and into an open position, **characterised in that** the operating lever (12) itself features a continuous sliding guide (13) for bringing the roof hatch cover (11) into a closing (10), rain (20) and open position (30).

2. Operating lever according to Claim 1, **characterised in that** the operating lever (11) in the dropped shape (a) can be extended (a) as a function of the cab height and of the position of the driver's seat.

## Revendications

1. Levier de commande d'une trappe de pavillon d'une cabine de camion, ladite trappe pouvant être amenée d'une position de fermeture dans une position de pluie et dans une position d'ouverture, **caractérisé en ce que** le levier (12) présente un dispositif de guidage continu à coulisse (13) pour le réglage de la trappe (11) dans les positions de fermeture (10), de pluie (20) et d'ouverture (30).

2. Levier de commande suivant la revendication 1, **caractérisé en ce que** le levier (11) est prolongeable sous forme coudée (a) en fonction de la hauteur de la cabine et de la position du siège du chauffeur.
